# EUROPEAN PATENT SPECIFICATION

(11) **EP 1 038 430 B1**
(45) Date of publication and mention of the grant of the patent: **04.04.2007**
(21) Application number: 00200149.3
(22) Date of filing: 17.01.2000
(51) Int. Cl.: A01D 69/08, A01D 34/00, A01D 34/68

(54) **Motion transmission for lawn mower**
Schaltgetriebe für Rasenmäher
Transmission de vitesse pour tondeuses

(30) Priority: 11.02.1999 IT MI990260
(43) Date of publication of application: 27.09.2000
(73) Proprietor: GGP Italy S.p.A., 31033 Castelfranco Veneto (TV) (IT)
(72) Inventor: Ferrari, Maurizio, 20144 Milano (IT)
(74) Representative: Mittler, Enrico

(56) References cited:
- US-A- 3 766 722
- US-A- 4 173 153
- US-A- 4 301 902
- US-A- 4 620 575

## Description

The present invention concerns a motion transmission for lawn mower with hydrostatic speed gear and gear shift lever provided with automatic return to neutral gear position upon operation of a brake control

In lawn mowers, in particular in those with sitting driver, normally called "mini tractors" the transmission of the motion from the engine to the driving wheels takes place through a speed gear, that can be either mechanical or hydrostatic.

If a mechanical gear shift is used, the neutral position necessary for the variation of the gear shift ratio is presently obtained -by intervening mechanically with the brake of the machine on a mobile tightener that is kept in engagement with a driving belt that extends between a pulley that is keyed on the shaft of the engine and a pulley that is keyed on the entry shaft of the gear shift. By relieving the stress exerted by the tightener on the driving belt, the latter loosens and it is possible to control the change of ratio through the lever

To use the same solution for a hydrostatic speed gear would certainly be appealing for lawn mower manufacturers because it would allow to unify the components for the two types of gear shift with a consequent reduction in manufacture costs.

By doing so, however, one would have to face some serious functional defects that in reality make the unification of the transmissions impracticable. In the case of the hydrostatic speed gear, in fact, at the moment of the engagement and of the release of the feed the belt would generate loud noises and vibrations because of the reduced diameter of the entry pulley, that is imposed by the gear shift ratio, by volume requirements and by the need to apply a cooling fan in the gear shift unit. In addition the automatic displacement of the gear shift lever to neutral position at the moment of the brake operation would not be guaranteed and this would create a safety problem because in case of an accidental release of the brake the machine would start to move forward again. Finally it would not be possible to change speed without acting on the brake to disengage the tightener.

The situation gets better if instead of the mobile tightener a fixed tightener is utilised and the hydrostatic speed gear is provided with a lever system that brings the gear lever back to neutral position at each operation on the brake. Besides, the greater complexity of the gear shift units determines greater costs and above all, from a functional point of view, in case of an overload on the transmission (for example on a slope) keeping of the lever in the position being controlled, and as a consequence the selected drive speed, is not insured

US-A-4 620 575 discloses a motion transmission for lawn mower according to the preamble of claim 1.

In view of this state of the art, object of the present invention has been to provide a motion transmission with hydrostatic speed gear for lawn mower that would be capable to obviate the defects of the current solutions, and in particular that would provide the automatic return of the gear shift lever back to neutral position at the moment of the operation on the brake, would assure the positioning of the aforesaid lever, and therefore the selected speed, even in conditions of overloading of the transmission, would have a noiseless operation and finally would have reduced costs and volume.

According to the invention such object has been attained with a motion transmission for lawn mower as recited in claim 1.

These and other characteristics of the present invention will be made evident by the following detailed description of said preferred embodiment, that is illustrated as a non limiting example in the enclosed drawings, in which:
Figure 1 shows the unit made up of the hydrostatic speed gear, of its control lever with relative clutch mechanism and of the brake control in longitudinal view during the stage of forward movement;
Figure 2 shows the magnified detail of the clutch mechanism associated with the gear shift lever and its connection with the brake control, still in a condition of forward drive;
Figure 3 shows the same magnified detail of Figure 2, as viewed from the opposite side;
Figure 4 shows the aforesaid clutch mechanism in cross section according to line IV-IV of Figure 2;
Figure 5 shows the same clutch mechanism as viewed in top plan with reference to Figure 4;
Figure 6 shows a part of said clutch mechanism as sectioned according to line VI-VI of Figure 4;
Figure 7 shows the unit of Figure 1 in top plan, still in condition of forward drive;
Figure 8 shows the same magnified detail of figure 2 in top plan, still in condition of forward drive;
Figure 9 shows the unit of figure 1, still in longitudinal view, in a reverse motion condition;
Figure 10 shows the same magnified detail of Figure 2 in a reverse motion condition;
Figure 11 shows the same magnified detail of Figure 10, as viewed from the opposite side;
Figure 12 shows the same detail of Figure 6 in a reverse motion condition;
Figure 13 shows the unit of Figure 1, still in a longitudinal view, in braking condition;
Figure 14 shows the same magnified detail of Figures 2 and 10 in condition of braking;
Figure 15 shows the same magnified detail of Figure 14, as viewed from the opposite side;
Figure 16 shows the clutch mechanism of Figure 4 in braking condition;
Figure 17 shows the belt transmission between the engine and the gear shift unit illustrated in the previous figures.

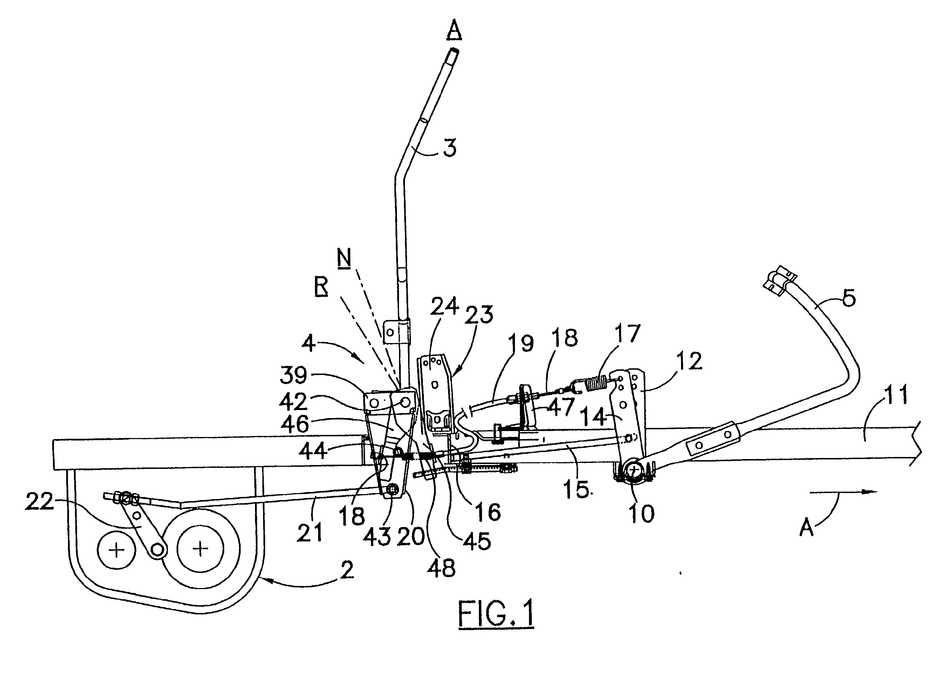

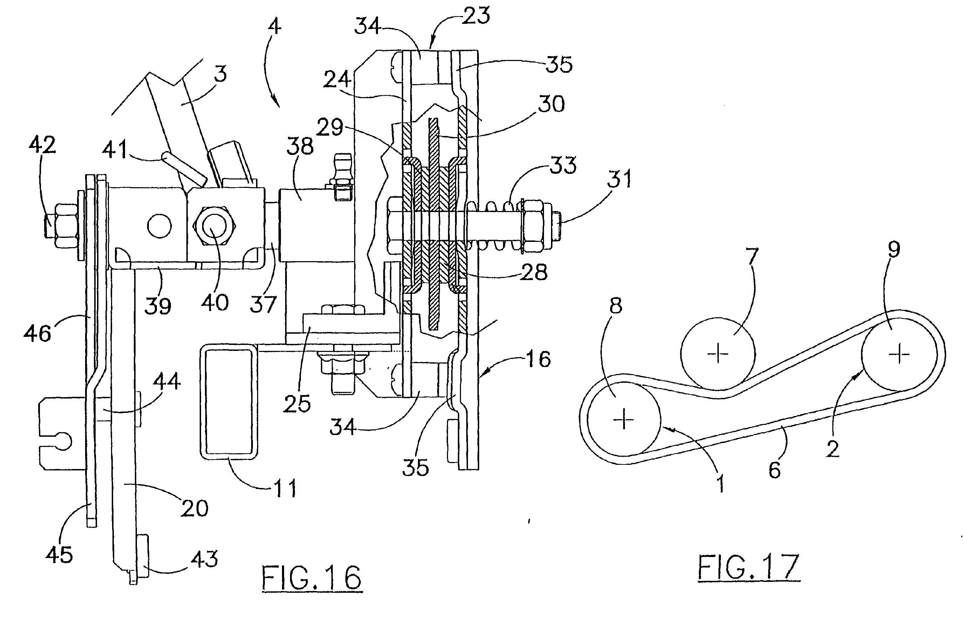

In Figures 1, 7, 9, 13 and 17 a motion transmission system for lawn mower is illustrated as a whole, in particular of the type with sitting driver, comprising an engine 1 (Figure 17), a hydrostatic gear shift unit 2 provided with control lever 3 with clutch mechanism 4 and a pedal brake control 5 (Figures 1, 7, 9, 13). A driving belt 6 (figure 17) kept in tension by a fixed tightener 7 transmits the motion from a pulley 8 that is keyed on the exit shaft of the engine to a pulley 9 that is keyed on the entry shaft of the gear shift unit.

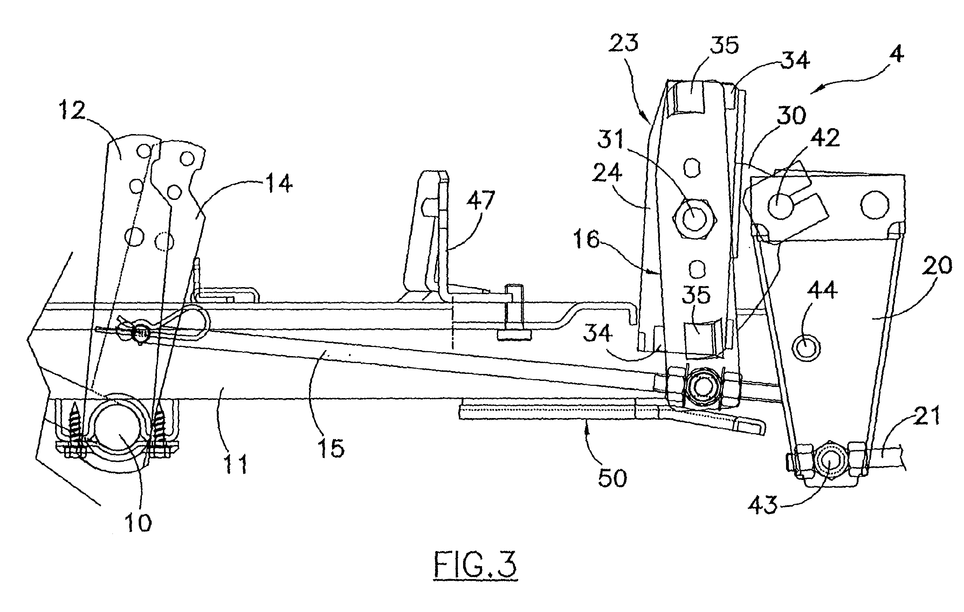

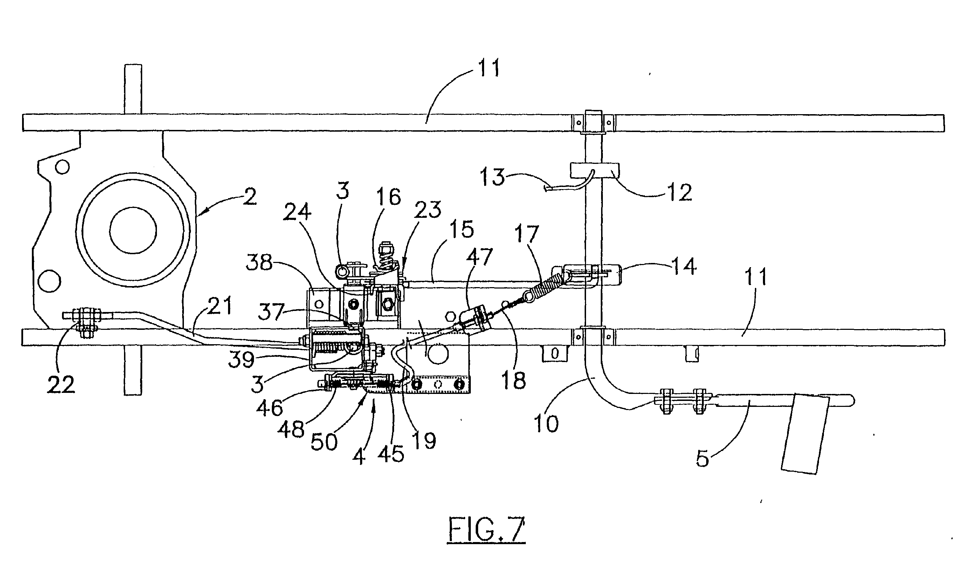

As it is possible to remark from Figures 1-8, that represent the forward drive condition, the pedal 5 for the control of the brake is connected to a pin 10 that is turningly supported by the frame 11 of the lawn mower in transversal position with respect to the drive direction (arrow A in Figure 1). On the pin 10 a first lever 12 is keyed that through a rod 13 (Figure 7) determines the operation on the braking device of the machine. In addition, on the same pin a second lever 14, shown in Figures 1-3, 7 and 8, is keyed that is connected by a rod 15 to a lever 16 which serves the release control function for the clutch mechanism 4. To the same lever 14 through a spring 17 a flexible metal wire 18 with sheath 19 is also attached, that is suitable for the control of a lever 20 of the clutch mechanism 4, that through a connecting rod 21 provides for the driving of the gear shift unit 2, the latter provided with a control lever 22.

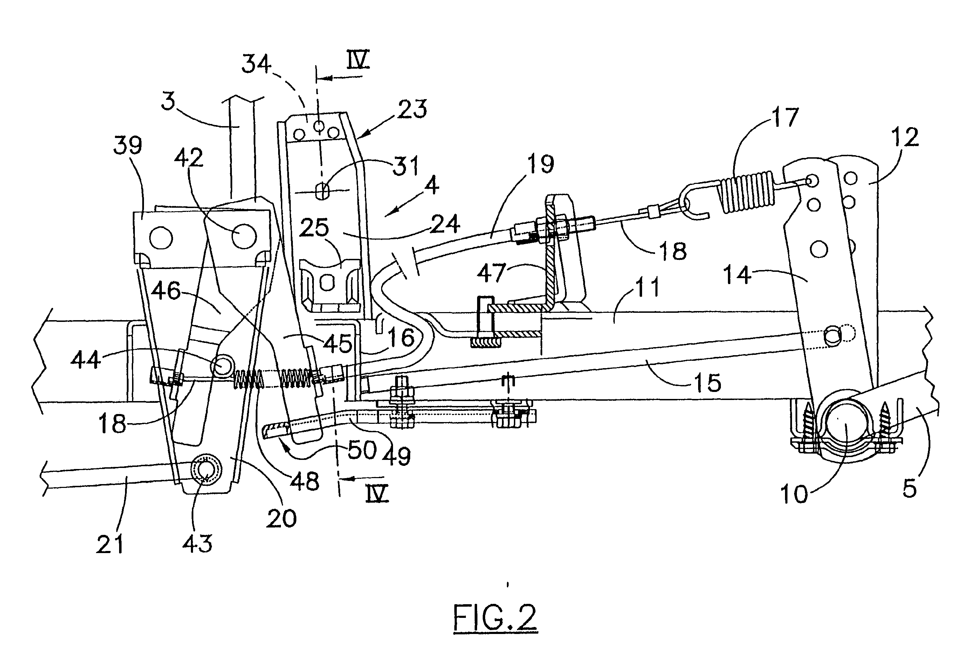

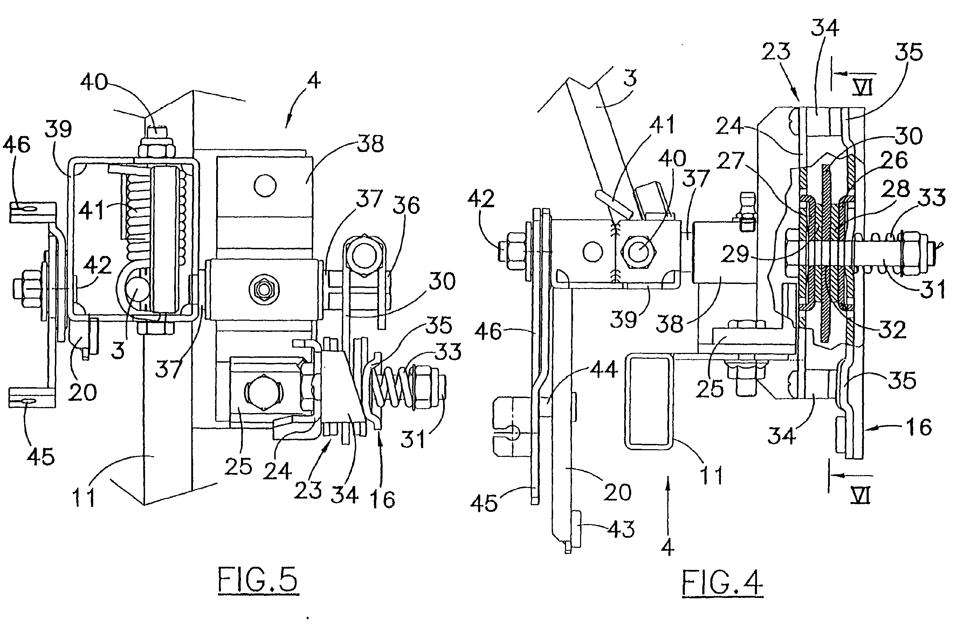

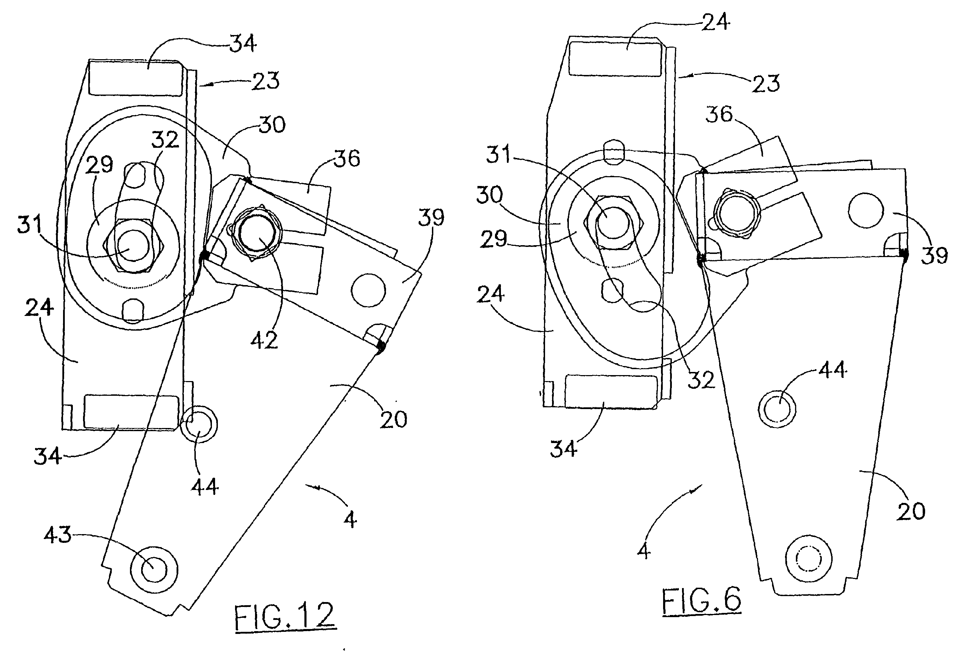

The clutch mechanism 4, shown in details in magnified scale in Figures 2-6 and 8, comprises an clutch unit 23 made up of the aforesaid lever 16 and of a fixed bracket 24, approximately with rectangular shape, that is fixed to the frame 11 through an L-shaped element 25. The lever 16 and the fixed bracket 24 support respective disks 28 and 29 through washers 26 and 27 made of friction material, between which a small plate 30 is interposed (Figure 4). The lever 16 is hinged onto a pin 31, that is fixed to the bracket 24 and goes through circular holes in the washers 26 and 27 and in the friction disks 28 and 29 and through an oblong circle arch slot 32 of the small plate 30 (Figure 6). A spring 33 with adjustable load that is wound around the pin 31 elastically biases the lever 16 toward the bracket 24 in such a way so as to keep the disks 28 and 29 in friction engagement with the small plate 30. The fixed bracket 24 bears at its top and bottom end respective cam wedges 34, with oblique front as shown in Figure 5, with which respective projecting portions 35 of the lever 16 are in engagement as cam followers.

As shown in Figures 4-6 and 8, the small plate 30 is fixed through a C shaped bracket 36 to a pin 37 that is turningly supported by a fixed support 38 and ends bound to a box-like revolving body 39 to which the lever 3 of the gear shift control is fixed. The lever 3 can therefore be displaced from one to the other of the three angular positions that are illustrated in Figures 1, 9 and 12, respectively forward drive (A), reverse (R) and neutral (N). In addition the lever 3 can be rotated around a pin 40 made on the box-like body 39, against the action of a spring 41 that is housed in the same box-like body, with the purpose to cooperate with a proper Z-shaped window of the body of the machine in order to prevent, with an obilged transversal movement, a dangerous direct passage of the lever from the position of forward drive to the reverse one, and vice versa.

To the box-like revolving body 39 the lever 20, with substantially triangular shape (Figures 2-6), is fixedly mounted, whose bottom vertex bears a pin 43 to which the connecting rod 21 for the operation of the gear shift units 2 (Figures 1 and 7) is attached, while at one of the two top vertexes it bears a pin 42 (lined up with the pin 37) on which two substantially symmetrical levers 45 and 46, that are crossed as a scissor are hinged. The lever 20 bears, lined up with the pins 42 and 43, a nib 44.

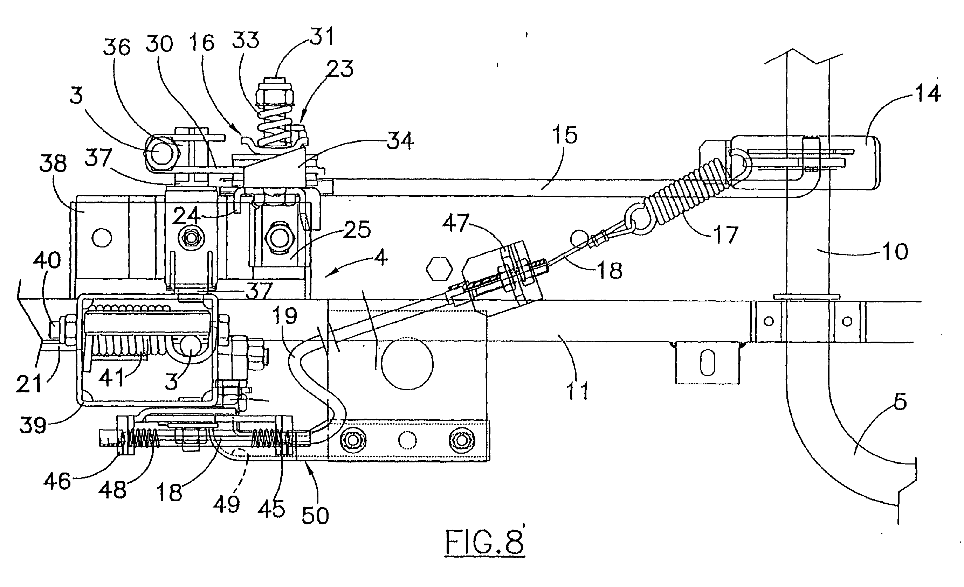

As shown in particular in Figures 2 and 8, at the fore side of the lever 45 an end of the sheath 19 is fixed, whose other end is fixed to an L-shape element 47 that is fixed to the frame 11, while at the back side of the lever 46 an end of the wire 18 with spring 48 is fixed, whose second end is attached to the lever 14 through the spring 17. An end of the lever 45 is slidingly housed in a longitudinal groove 49 of a curved guide 50 that is fixed to the frame 11.

As already said, the motion transmission is shown in Figures 1-8 in a condition of forward drive with the control lever 3 engaged in the corresponding position A (Figures 1 and 2), the clutch unit 23 in engaged position (Figure 4) the triangular lever 20 in vertical axis position (Figures 1-3 and 6) and the two levers 45 and 46 in wide apart position with the lever 46 in engagement with the nib 44 (Figures 1, 2, 7 and 8). In this operating condition the friction between the disks 28 and 29 and the small plate 30 of the clutch unit 23 keeps the lever 3 in the correct forward drive position also in case of overload, for example during overcoming of a slope.

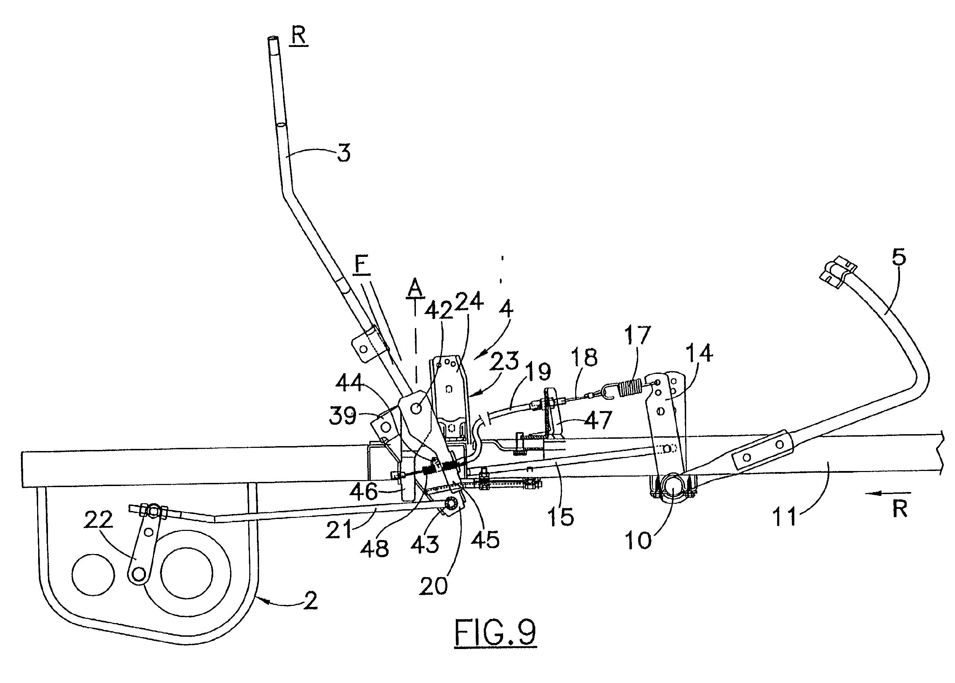

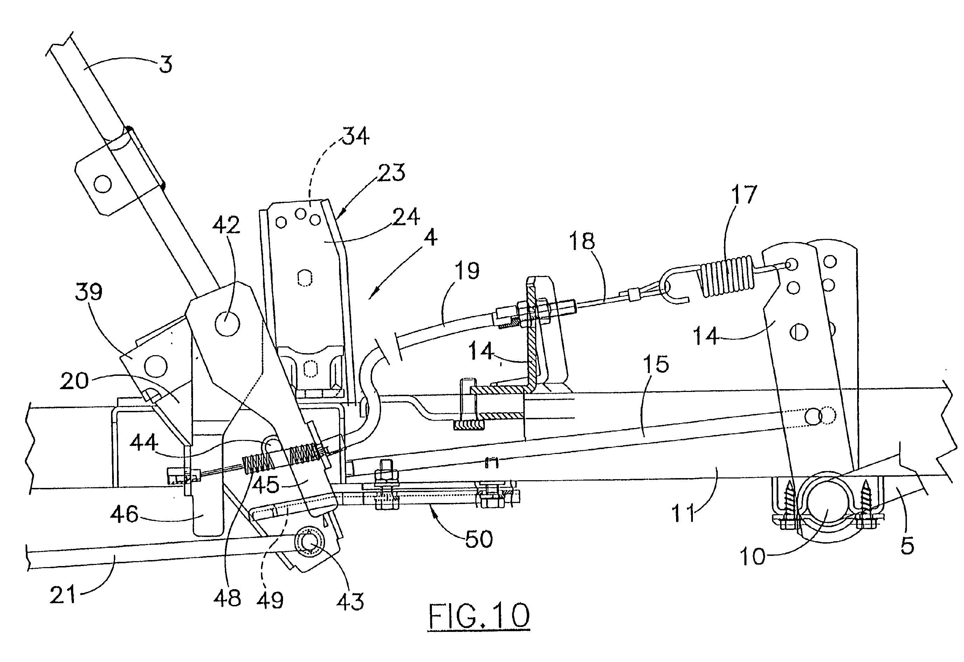

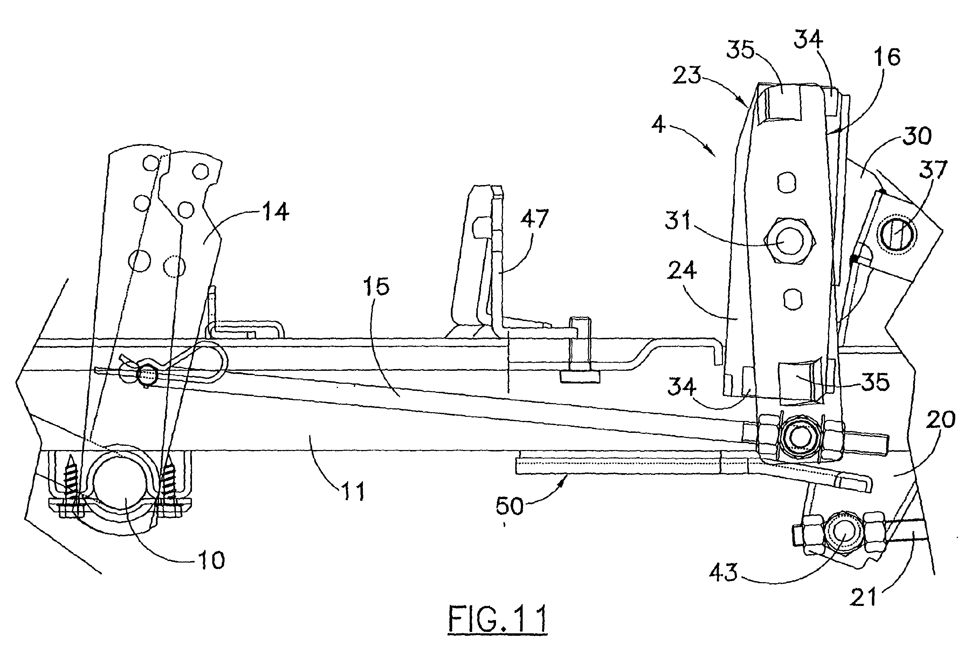

An analogous situation occurs in case of reverse, shown in Figures 9-11 and indicated by the arrow R, when the control lever 3 is in position R, the clutch unit 23 is in engaged position, the lever 20 is in an inclined position and the levers 45 and 46 are still in wide apart position but with the nib 44 engaged by the lever 45.

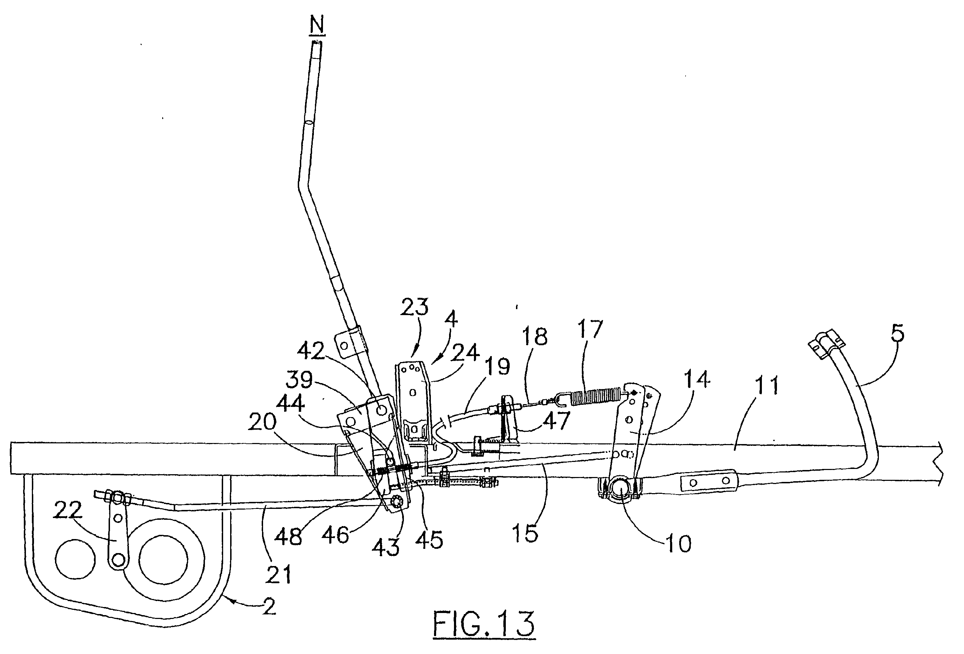

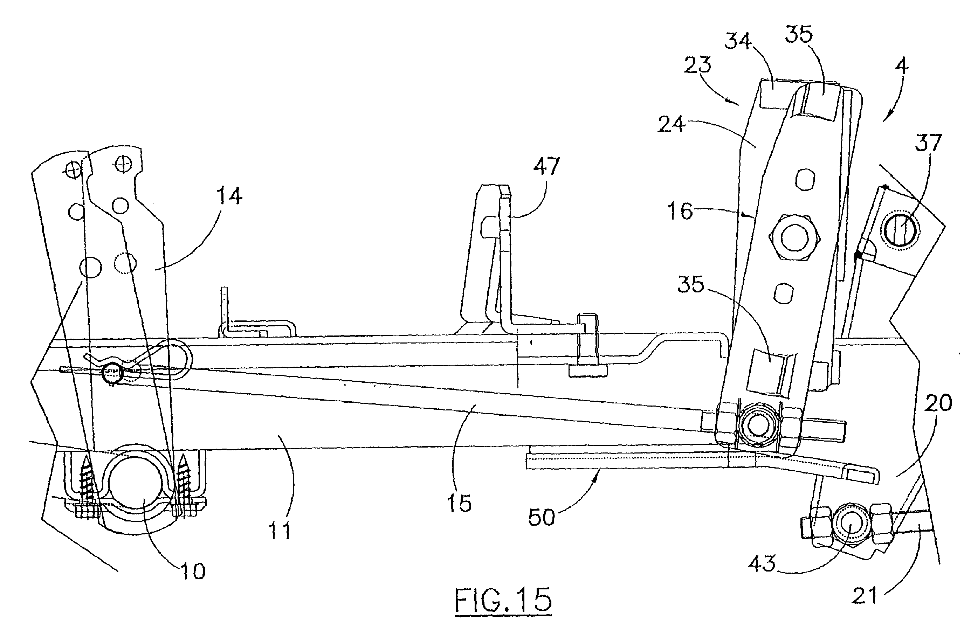

If, in condition of forward drive, the operator presses on the pedal 5 for the control of the brake (Figures 13-16), a first stroke lenght of the pedal 5, through the lever 14 and the rod 15, determines the rotation of the lever 16 (Figure 15), that by acting with its projections 35 on the oblique cams 34 relieves the load from the spring 33 and allows the mutual spreading apart of the friction disks 28 and 29 of the small plate 30, thus setting the clutch unit 23 in the condition of release of Figure 16. A relative slide between the pin 31 of the clutch unit 23 and the slot 32 of the small plate 30 has therefore been possible, by which the same small plate and as a consequence the box-like body 39 has the possibility to rotate around the pin 37. The control lever 3 can therefore be moved manually into a new operating position with consequent rotation of the lever 20 around the pin 37 and likewise consequent driving of the gear shift units 2 through the connecting rod 21 and the lever 22. The springs 17 and 48 guarantee the return of the clutch unit 23 in engaged position (Figure 4) at the moment of the release of the pedal 5.

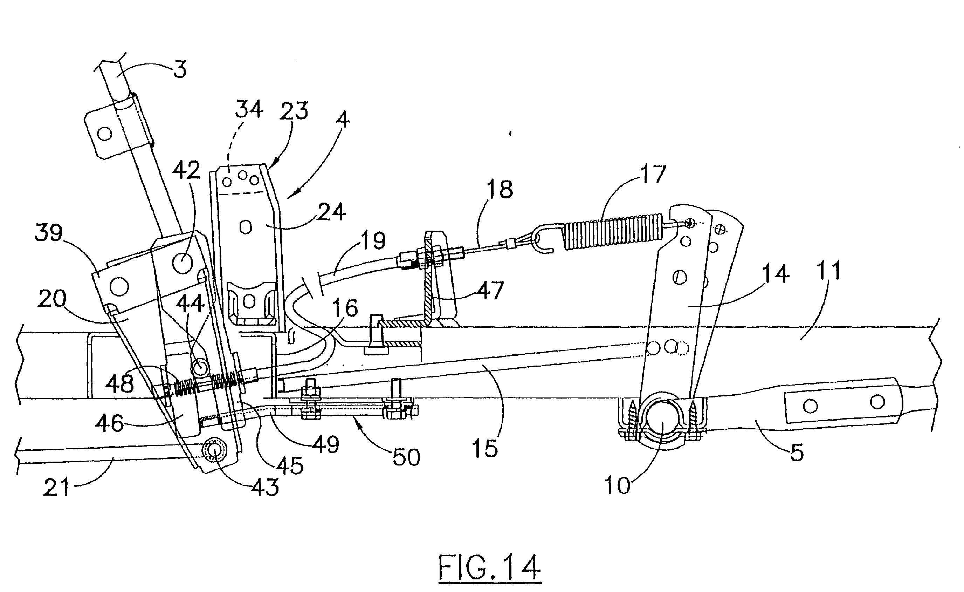

If, with the clutch unit 23 in disengaged position and the control lever 3 still in forward drive position, the operator continues to exert a pressure on the brake pedal 5, a second stroke lenght of the same pedal can control the anticlockwise rotation (as regards Figure 1) of the lever 46 through the flexible metal wire 18, while the lever 45 is kept in position by the reaction of the sheath 19 and by its head engagement with the end of the internal groove 49 of the guide 50, that is the two levers 45 and 46 close as scissors as shown in Figure 14. As a consequence, by exerting on the nib 44, the lever 46 forces the anticlockwise rotation of the lever 20, that brings the lever 3 in the neutral position N and through the connecting rod 21 and the lever 22 it also sets in neutral the gear shift unit 2. Simultaneously the lever 12 controls the stop of the machine through the pole 13.

A similar effect is produced by the driving of the brake pedal 5 while the machine is in a condition of reverse as shown in Figures 9-12. The only difference is that this time the second stroke lenght of the clutch unit pedal 5 that is by now disengaged determines the anticlockwise rotation of the lever 46 up to its head engagement with the end of the guide 50 and the limited clockwise rotation of the lever 45 up to the corresponding end of the internal groove 49 of the same guide, thus, by operating on the nib 44, the lever 45 controls the clockwise rotation of the lever 20 with consequent setting in neutral of the gear shift unit 2.

## Claims

1. Motion transmission for lawn mower, comprising a hydrostatic speed gear unit (2), a control lever (3) and a clutch unit (23) associated with said gear shift lever (3) and with a brake control (5) in such a way as to keep said lever (3) in engaged position during the forward movement of the machine whichever is the load that is applied to the same transmission and to cause automatically its release upon operation of said brake control (5), wherein
said clutch unit (23) is comprised in a clutch mechanism (4) that is operatively interposed between said brake control (5) and said gear shift unit (2) and realised in such a way that a first stroke lenght of the braking member determines the disengagement of the clutch and the release of the control lever (3) and a second stroke lenght of the same brake member (5) determines the return of said control lever (3) to neutral position and setting of the gear shift unit (2) in neutral position,
**characterized in that** said clutch unit (23) comprises a fixed bracket (24) provided with first friction means (29), a disengagement lever (16) operated by said brake member (5) and provided with second friction means (28), a small mobile plate (30) interposed between said friction means (28, 29) and mechanically bound to said control lever (3), elastic means (33) acting on said disengagement lever (16) to keep said friction means (28, 29) in friction engagement with said small plate (30) and cam means (34) and cam followers (35) cooperating with each other to force said operating lever (16) to win the action of said elastic means (33) and to disengage said small plate (30) from said friction means (28, 29) upon operation of said disengagement lever (16) during said first stroke lenght of the brake control (5).

2. Motion transmission according to claim 1, **characterized in that** said small mobile plate (30) can be rotated around a pin (37) together with said control lever (3) and with an operation lever (20) connected with the gear shift unit (2).

3. Motion transmission according to claim 2, **characterized in that** said operation lever (20) turningly supports a pair of levers (45, 46) that are arranged as scissors and are operatively connected with said brake control (5) so as to be moved from a wide apart position to a near position in which they hold said operation lever (20) and move it to a position of activation of the gear shift unit (2) during of said second stroke lenght of the brake control (5).

4. Motion transmission according to claim 3, **characterized in that** said scissors levers (45, 46) are connected with said brake control (5) by through a flexible wire (18) and sheath (19) means.

5. Motion transmission according to claim 3, **characterized in that** said flexible wire (18) and sheath (19) means are provided with elastic means (17, 48) returning said scissors levers (45, 46) to said wide apart position.

## Patentansprüche

1. Antriebsgetriebe für Rasenmäher, das eine hydrostatische Getriebestufeneinheit (2), einen Kontrollhebel (3) und eine Kupplungseinheit (23) aufweist, die mit dem Gangwechselhebel (3) und mit einer Bremssteuerung (5) derart verbunden ist, dass der Hebel (3) während der Vorwärtsbewegung der Maschine in eingerasteter Position gehalten wird, welche Last auch immer an diesem Getriebe anliegt, und bei Betätigung der Bremssteuerung (5) automatisch seine Entriegelung bewirkt, wobei
die Kupplungseinheit (23) in einem Kupplungsmechanismus (4) enthalten ist, der wirkend zwischen die Bremssteuerung (5) und die Gangwechseleinheit (2) eingefügt ist und derart realisiert ist, dass eine erste Hublänge des Bremsteils die Ausrückung der Kupplung und das Entriegeln des Kontrollhebels (3) bewirkt und eine zweite Hublänge des selben Bremsteils (5) das Zurückkehren des Kontrollhebels (3) in die neutrale Stellung und das Einstellen der Gangwechseleinheit (2) in der neutralen Position bewirkt, **gekennzeichnet dadurch, dass**
die Kupplungseinheit (29) enthält: einen festen Halter (24), der mit einem ersten Reibungselement (29) ausgestattet ist, einen Ausrückhebel (16), der durch das Bremsteil (5) betätigt wird und mit einem zweiten Reibungselement (28) ausgestattet ist, eine kleine bewegliche Platte (30), die zwischen die Reibungselemente (28, 29) eingebracht ist und mechanisch mit dem Kontrollhebel (3) verbunden ist, ein elastisches Element (33), das auf den Ausrückhebel (16) wirkt, um die Reibungselemente (28,29) in Reibkontakt mit der kleinen Platte (30) zu halten, und ein Nockenelement (34) und eine Nockenmanschette (35), die zusammen arbeiten, um den Betriebshebel (16) zu zwingen, die Bewegung des elastischen Elements (33) zu erreichen und die kleine Platte (30) bei der Betätigung des Ausrückhebels (16) während der ersten Hublänge der Bremssteuerung (5) von den Reibungselementen (28,29) zu lösen.

2. Antriebsgetriebe gemäß Anspruch 1, **gekennzeichnet dadurch, dass** sich die kleine bewegliche Platte (30) zusammen mit dem Kontrollhebel (3) und mit einem Betriebshebel (20), der mit der Gangwechseleinheit (2) verbunden ist, um einen Stift (37) drehen kann.

3. Antriebsgetriebe gemäß Anspruch 2, **gekennzeichnet dadurch, dass** der Betriebshebel (20) drehbar ein Paar Hebel (45,46) abstützt, die als Schere angeordnet sind und wirkend mit der Bremssteuerung (5) verbunden sind, so dass sie aus einer weit entfernten Position in eine nahe Position bewegt werden, in der sie den Betriebshebel (20) halten und ihn während der zweiten Hublänge der Bremssteuerung (5) in eine Position zur Aktivierung der Gangwechseleinheit (2) bewegen.

4. Antriebsgetriebe gemäß Anspruch 3, **gekennzeichnet dadurch, dass** die Scherenhebel (45,46) durch einen flexiblen Draht (18) und ein Hüllelement (19) mit der Bremssteuerung (5) verbunden sind.

5. Antriebsgetriebe gemäß Anspruch 3, **gekennzeichnet dadurch, dass** der flexible Draht (18) und das Hüllelement (19) mit einem elastischen Element (17, 48) ausgestattet sind, die die Scherenhebel (45,46) in die weit entfernte Position zurückbringen.

## Revendications

1. Transmission de mouvement pour tondeuse à gazon, comprenant une boîte de vitesse hydrostatique (2), un levier de commande (3) et une unité d'embrayage (23) associée au dit levier de changement de vitesse (3) et à une commande de frein (5) de façon à garder ledit levier (3) en position en prise pendant le mouvement vers l'avant de la machine quelle que soit la charge qui est appliquée sur la même transmission et pour causer automatiquement sa libération lors du fonctionnement de ladite commande de frein (5), dans laquelle
ladite unité d'embrayage (23) est comprise dans un mécanisme d'embrayage (4) qui est intercalé fonctionnellement entre ladite commande de frein (5) et ladite unité de changement de vitesse (2) et réalisée de telle manière qu'une première longueur de course de l'élément de frein détermine la venue hors de prise de l'embrayage et la libération du levier de commande (3) et une seconde longueur de course du même élément de frein (5) détermine le retour dudit levier de commande (3) en position neutre et le réglage de l'unité de changement de vitesse (2) en position neutre,
**caractérisée en ce que** ladite unité d'embrayage (23) comprend un support fixe (24) pourvu de premiers moyens de frottement (29), un levier de venue hors de prise (16) actionné par ledit élément de frein (5) et pourvu de seconds moyens de frottement (28), une petite plaque mobile (30) intercalée entre lesdits moyens de frottement (28, 29) et liée mécaniquement au dit levier de commande (3), des moyens élastiques (33) agissant sur ledit levier de venue hors de prise (16) pour garder lesdits moyens de frottement (28, 29) en prise par frottement avec ladite petite plaque (30) et des moyens de came (34) et des suiveurs de came (35) coopérant ensemble pour forcer ledit levier d'actionnement (16) à vaincre l'action desdits moyens élastiques (33) et pour faire venir hors de prise ladite petite plaque (30) desdits moyens de frottement (28, 29) lors de l'actionnement dudit levier de venue hors de prise (16) pendant ladite première longueur de course de la commande de frein (5).

2. Transmission de mouvement selon la revendication 1, **caractérisée en ce que** ladite petite plaque mobile (30) peut être tournée autour d'un axe (37) conjointement avec ledit levier de commande (3) et avec un levier d'actionnement (20) connecté à l'unité de changement de vitesse (2).

3. Transmission de mouvement selon la revendication 2, **caractérisée en ce que** ledit levier d'actionnement (20) supporte à rotation une paire de leviers (45, 46) qui sont agencés comme des ciseaux et sont connectés fonctionnellement à ladite commande frein (5) de façon à être déplacés depuis une position éloignée vers une position proche d'actionnement de l'unité de changement de vitesse (2) pendant ladite seconde longueur de course de la commande frein (5).

4. Transmission de mouvement selon la revendication 3, **caractérisée en ce que** lesdits leviers en ciseaux (45, 46) sont connectés à ladite commande de frein (5) par l'intermédiaire de moyens formant fil flexible (18) et gaine (19).

5. Transmission de mouvement selon la revendication 3, **caractérisée en ce que** lesdits moyens formant fil flexible (18) et gaine (19) sont pourvus de moyens élastiques (17, 48) ramenant lesdits leviers en ciseaux (45, 46) dans ladite position éloignée.
